(19) Europäisches Patentamt

European Patent Office

Office européen des brevets

(11) **EP 0 681 261 B1**

(12) **EUROPEAN PATENT SPECIFICATION**

(45) Date of publication and mention
of the grant of the patent:
**08.08.2001 Bulletin 2001/32**

(51) Int Cl.$^7$: **G06K 11/18**, G01L 5/22

(21) Application number: **95480024.9**

(22) Date of filing: **21.03.1995**

(54) **Pointing device transducer using thick film resistor strain sensors**

Wandler für Hinweisanordnung mit Dickschichtwiderständen als Dehnungssensoren

Transducteur pour dispositif de pointage utilisant des résistances à film épais comme jauges de contrainte

(84) Designated Contracting States:
**DE FR GB**

(30) Priority: **29.04.1994 US 235078**

(43) Date of publication of application:
**08.11.1995 Bulletin 1995/45**

(73) Proprietor: **International Business Machines
Corporation
Armonk, N.Y. 10504 (US)**

(72) Inventors:
• **Rudisill, Charles Albert
Apex, North Carolina 27502 (US)**
• **Winstead, Russell Evans
Raleigh, North Carolina 27614 (US)**

(74) Representative: **de Pena, Alain et al
Compagnie IBM France
Département de Propriété Intellectuelle
06610 La Gaude (FR)**

(56) References cited:
**WO-A-92/09996        DE-A- 4 209 668
GB-A- 2 234 629       US-A- 3 924 458
US-A- 4 280 114       US-A- 4 680 577**

**Description**

BACKGROUND OF THE INVENTION

Field of the Invention:

This invention relates to a pointing device and more particularly to such a device for controlling the location of a cursor on a computer screen. In particular, this invention incorporates thick film resistor strain sensors on a cantilevered beam pointing device to sense user directional pressure on the beam.

Description of the Prior Art:

Currently, the IBM Trackpoint II transducer is a cantilevered beam utilizing metal foil strain gages mounted on each face of the plastic column. The transducer senses small directional pressures generated by a user pressing the column in the direction the user wants the cursor to move. Metal foil strain gages use serpentine windings of thin metal wire mounted on plastic to sense the slight bending of the column. The cross-sectional area of the wires changes with the bending, resulting in a small change in resistance.

This change in resistance is detected by forming two resistor divider networks with a voltage applied to one end. The resistors of one network are the left and right metal foil strain gages, and the resistors of the other network are the front and back gages. The voltage is measured at a point between the top and bottom resistor of each strain gage, resulting in a signal indicating the amount of pressure in each direction. This signal is amplified and utilized by the computer to move the cursor on the screen in some predetermined relation to the magnitude of the signal. The pointing device is generally located on the computer keyboard, between keys G and H, for example. However, this device could be used in other "pointing" or directionsensing applications.

The current Trackpoint design works well, but has some disadvantages. The metal foil strain gages are expensive, and each one must be individually glued onto a column face. Thus, it is not practical to completely automate the fabrication process. Since the metal foil strain gages use windings of wire which act like antennas, they are sensitive to electromagnetic noise. They are also sensitive to heat. Their effective gage factor, or sensitivity, is low enough that a low modulus flexible column, such as plastic, must be used which leads to early fatigue and breaking. Response is also subject to variabilities resulting from the bonding process of gage to post, location of gage, adhesive thickness, air bubbles under gage, etc.

A need remains in the art for a cheaper, easily fabricated, sensitive and durable pointing device.

US patent 4,280,114 ((R.M. DelVecchio et al.) entitled "Discontinuous Metal and Cermet Film Resistors and Strain Gauges" discloses an improved continuous and cernet film resistors and strain gauges wherein the film is maintained in a constant humidity in the range of 15% to 45% thereby substantially increasing the stability of the strain gauge.

International Patent Application WO-A-92/09996 (Lexmark International Inc.) entitled "Analog Input Device Located in the Primary Typing Area of a Keyboard" discloses a sensor device placed either underneath a key cap of a key on a keyboard or in between two keys on a keyboard so that cursor movement may be carried out from the keyboard itself. If the sensor device is placed underneath a key cap, then the key cap is a manual cursor controller. If, on the other hand, the sensor device is placed in between two keys, a joystick is used as a manual cursor controller.

SUMMARY OF THE INVENTION

It is an object of the present invention to provide such a cheap, easily fabricated, sensitive and durable pointing device.

The above object has been accomplished with a pointing device having a cantilevered beam or post with thick-film, cermet, strain gages deposited or bonded on at least two nonparallel sides of the beam. Preferably, the strain gages would be positioned on orthogonal surfaces of the beam so as to be most sensitive to two-dimensional bending of **the beam.** The thick film strain gages act as strain sensors by changing resistance when stressed and thereby indicating the amount and direction of load force on the beam. In an embodiment, there are four, thick film gages mounted around the beam and positioned to sense forward, right, backward and left flexure of a beam oriented vertically as a post. As a further feature of the invention, the pointing post is located on a input keyboard for the computing system.

According to another embodiment of the present invention, a computer display cursor pointing apparatus for sensing directional force applied by a user and generating a directional information signal, comprises :

a rigid base;

a post formed of a ceramic-composite material having one end fixed to said base and an opposite end moveable relative to said base, said post flexing in response to application of force at said opposite end by the user in a direction generally transverse to the length of the post;

two resistors, each composed of thick-film cermet material, screen printed and sintered onto orthogonal sides of the post, each resistor for sensing strain when the post is flexed in response to the application of force to the post and changing resistance in proportion to the sensed strain; and

means for sensing voltage across the resistors to detect the resistance in said resistors and thereby the flexure of the post.

The resulting design also has greater sensitivity, and is easily adaptable to different mechanical footprints. In addition, the durability pointing device is outstanding; devices constructed in accordance with the invention have been flexed in excess of 20 million times with a 350 gram load without failure. Also, the pointing device is easily manufactured as the cermet may be screen printed onto the beam, and laser-trimmed to precisely adjust the nominal resistance of each strain gage on the beam. Other advantages include a strain gage with a high gage factor, and a low temperature coefficient of change. As a result, the pointing devices have characteristics that vary little from device to device.

BRIEF DESCRIPTION OF THE DRAWINGS

FIG. 1 is an isometric view of the post portion of a pointing device according to a preferred embodiment of the present invention.

FIGS. 2A, 2B, 2C and 2D show all four sides of the post of FIG. 1.

FIG. 3 is a sectioned, front view of the post of FIG. 1 inserted into a base.

FIGS. 4A and 4B is a top, somewhat schematic view of the base and post assembly of FIG. 3.

FIG. 5 illustrates the interconnection of the cermet strain gages to the computing system to control the cursor in the computer display.

FIG. 6 is an isometric drawing of the present invention installed in a computer keyboard.

DETAILED DESCRIPTION OF THE PREFERRED EMBODIMENTS

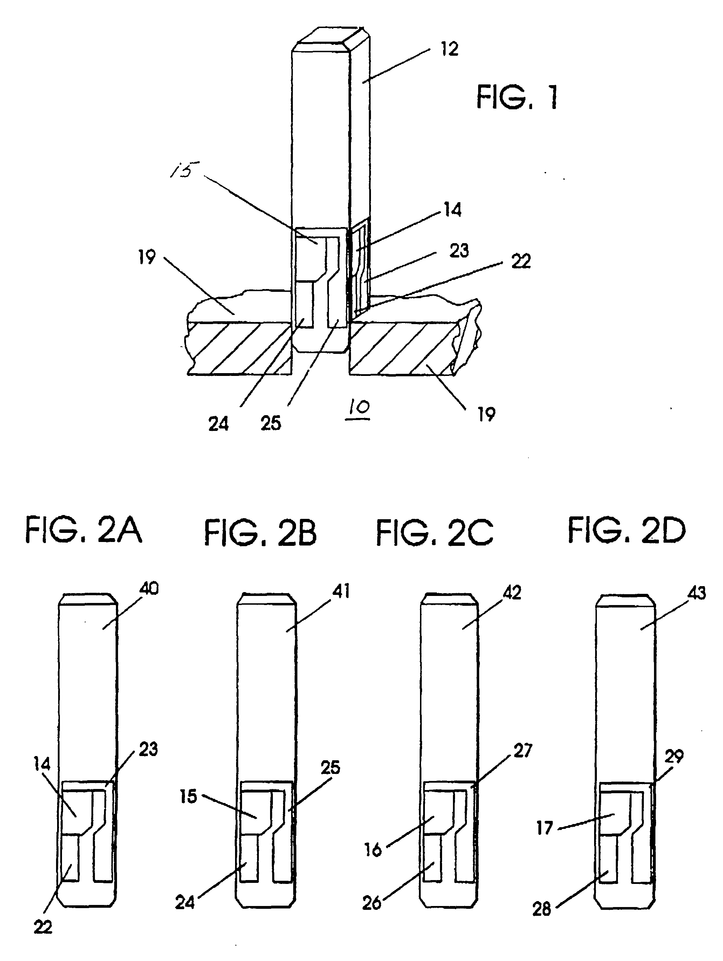

FIG. 1 shows an isometric view of a pointing device 10 in accordance with the present invention. The pointing device in the preferred embodiment is a rectangular column, or post 12, inserted into a rigid base 19. The size of post 12 is selected so that it fits easily between keys on a keyboard, and is a convenient size to operate with a finger. The column or post could also be a cylinder having a variety of cross-sectional shapes, such as circle or ellipse.

In the preferred embodiment, post 12 is 0.070 inches wide by 0.070 inches deep and 0.40 inches high. This size post is easy to handle during manufacturing processes which include, as discussed below, the screen printing of thick film resistors on the post side walls. The post is formed of a ceramic, such as, for example, aluminum oxide 85% to 97% by weight, with the remainder comprising glass binder. The post is pressed and sintered (fired at approximately 1500 to 2500 degrees centigrade). During sintering, organic binders burn off, the glass melts and the aluminum oxide particles grow or sinter together. The actual temperature for sintering varies with the materials used.

Those skilled in the art will appreciate that the post could also be extruded, punched, or cast and formed of other materials, including other ceramics, glass-ceramics, or porcelain-on-steel. Of course, an important factor in the selection of beam material is the material's resistance to flexure fatigue. The beam material must be compatible with the thick-film resistors and the conductors printed on the beam. In the preferred embodiment, the post was designed to flex to produce a resistivity change $R_D/R_0$ greater than 0.0015 when a 200 gram load was applied at the top of the post. Also, in the preferred embodiment, the post has a breaking strength on flexure that is greater than 8 pounds. These parameters can vary if a lower pointing device sensitivity, and/or post-breaking strength, is acceptable in a given application of the pointing device.

The thick film resistors 14-17 (16 and 17 not shown in FIG. 1) are screen printed on the post or column 12 and laser trimmed. Thick film resistors in the preferred embodiment range in thickness between 0.0003 inches to 0.0010 inches. As used herein, the term thick film resistors simply means printed resistors. Resistors on opposing sides of the post are laser trimmed to match their resistances to within plus or minus 1% of each other. Resistors on non-opposing faces of the post may be as much as 15% apart, and preferably no more than 5% apart in resistance. The "ink" used to print the thick film resistors is a cermet (ceramic/metal mixture), such as Bismuth Ruthenium Oxide. Such materials are well known in the art. Preferably, the cermet material selected has a gage factor (change in resistance as a function of strain) of at least 12 and as high as 22. In the preferred embodiment, the gage factor of the cermet is 18.

After the cermet is screened onto column 12, the cermet is fired at around 800 to 1000 degrees celsius to sinter and bond the material. The cermet operates as a piezoresistor, meaning that its resistance changes with strain. When the cermet is strained, the electrical conduction path changes because the mean distance between conductive phases increases in tension and decreases in compression. Thus, when a user pushes the column to the right for example, the strain gage 14 on the right side is compressed, resulting in a lower resistance, and the strain gage 16 on the left side (hidden) is in tension and, therefore, has a higher resistance. The column terminals or electrodes 22-29 (26-29 not shown in FIG. 1) are also screened onto column 12 on top of, or underneath, the gages 14-17.

In the preferred embodiment, electrodes 22-29 are screened and fired first, and resistors 14-17 are screened on top of the electrodes. Depending on the choice of materials for the resistors and electrodes, both might be fired at the same time. The electrodes are formed of standard thick-film materials, such as gold alloys and palladium-silver alloys. Two gages can be used as long as they are not on parallel surfaces, but the use of four gages, as in this preferred embodiment, doubles the sensitivity.

Dependent on the application for the pointing device, the post can be designed to dimensions other than those given for the preferred embodiment. The design begins by calculating the fiber stress in the post which is given by the equation:

$$(1) \qquad \sigma = 6LW/A^3$$

where:

$\sigma$ is the stress;
L is the length of the post;
W is the load force on the post;
A is side length (assumes square post.

Once the stress is known the strain in the gage may be found by use of equation (2):

$$(2) \qquad \in = \sigma / E$$

where:

$\in$ is the strain in the gage;
$\sigma$ is the stress from equation (1);
E is the modulus of elasticity for the cermet.

Finally, the resistance change of cermet under strain is given by equation (3):

$$(3) \qquad G_f = (R_D/R_0)/\in$$

where:

$G_f$ is the gage factor;
$R_D$ is the change in resistance under strain;
$R_0$ is the resistance with no strain;
$\in$ is the strain from equation (3).

Accordingly, with these equations, a post of almost any dimension may be designed. Of course, the form of the equation (1) changes with the geometry of the post if the post is not square in cross-section, and (2) changes with the distance of the resistive strain gage from the bottom of the post.

FIG. 2 shows all four sides of column 12. Right side 40 contains electrodes 22 and 23 and thick film resistor 14. Front 41 contains electrodes 24 and 25 and resistor 15. Left side 42 contains electrodes 26 and 27 and resistor 16, and back 43 contains electrodes 28 and 29 and resistor 17.

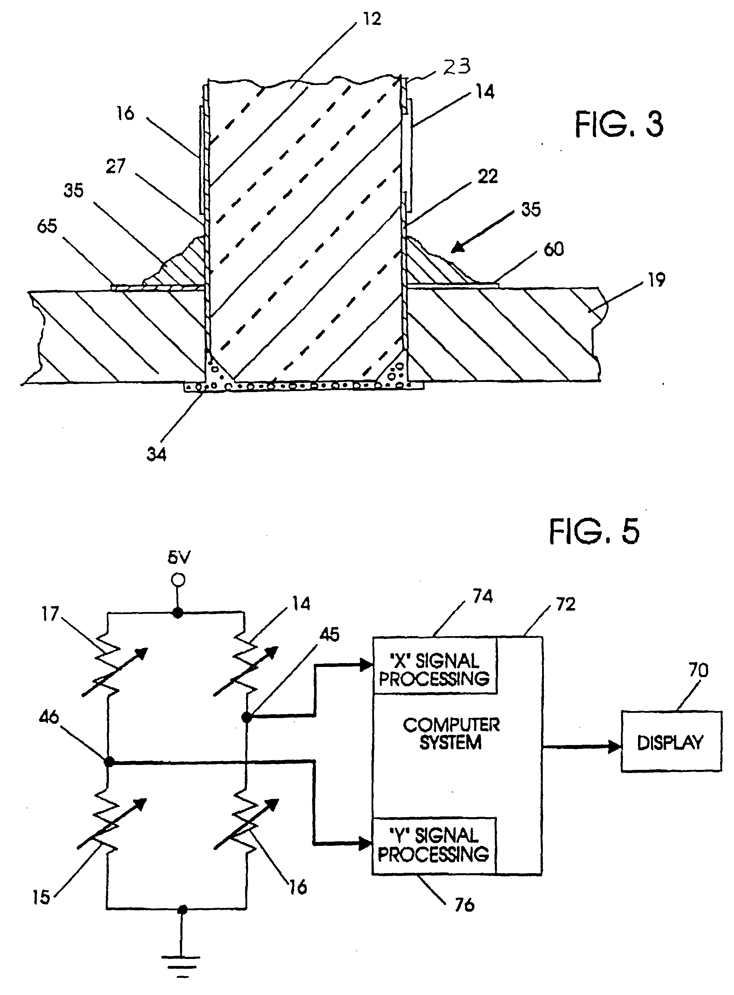

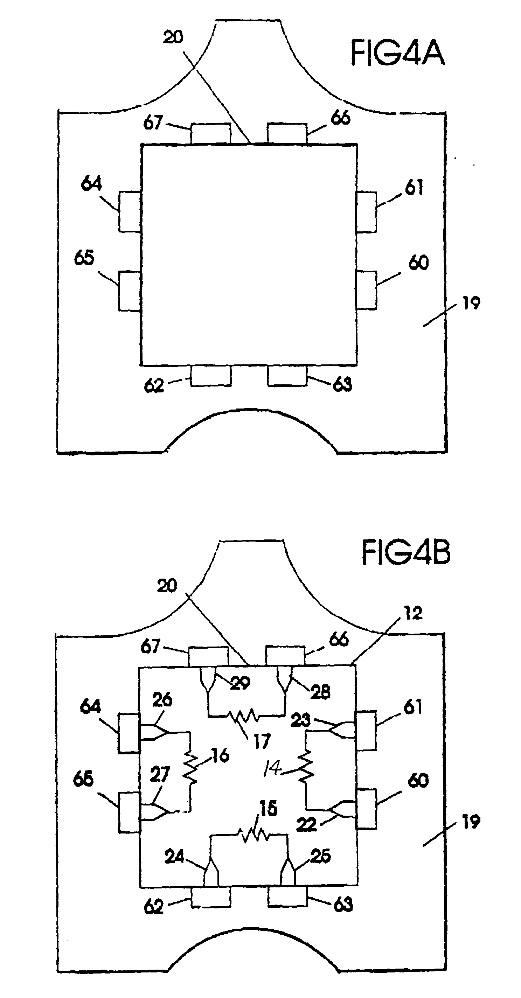

FIG. 3 shows a sectioned front view of the present invention. Post 12 is inserted into a square hole 20 cut into base 19. Base 19 is preferably composed of FR-4 epoxy-glass laminate material, 0.062" thick with standard etched copper circuitry. Square hole 20 is punched through the epoxy-glass laminate. Conductive pads 60-67 of copper, or the like (shown in FIG. 4), are position to line up with, and make contact with, terminals 22-29. Then, terminals 22-29 are soldered to pads 60-67, respectively, with solder 35. Post or beam 12 is attached to base 19 with a high modulus and low viscosity adhesive 34, such as epoxy-resin cement 34. In the preferred embodiment, the adhesive has a hardness of Shore D88 and an aluminum-to-aluminum shear strength of 3500 psi. Other adhesives may be used; the function of the adhesive bond is to stabilize the beam/base joint and avoid cracking of the solder joints 35. Also, solders with high fatigue resistance may be used. Other base materials, such as ceramic and plastic may be used, as well as other termination methods, such as a discrete lead frame attached to the beam and base.

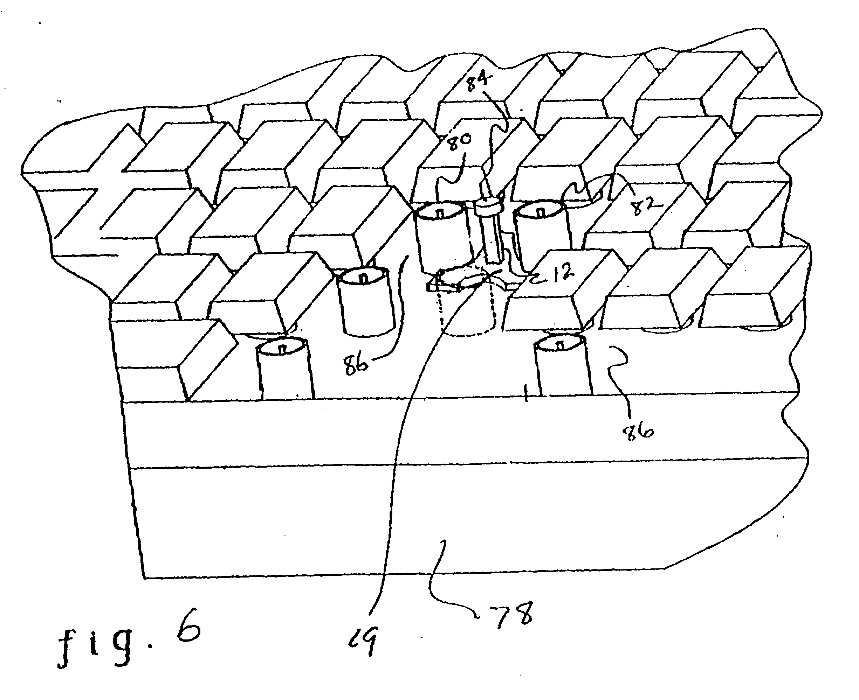

FIG. 4 shows a top view of base 19 and column or post 12, with thick film resistors 14-17 shown schematically for clarity. Post 12 is inserted into square hole 20. Base 19 is Y-shaped in order to fit between keyboard keys, and to provide a secure base of an appropriate shape to be mounted to features in the keyboard. Conductive pads 60-67 are arrayed, as shown, to electrical contact with terminals 22-29 when column 12 is inserted. Pads 60-67 may be affixed by screening, photolithography, or other known techniques for wiring substrates. Pads 60-67 are connected to electronic circuitry (FIG. 6) for sensing the changes in resistance in resistors 14-17 (FIG. 5).

In FIG. 5, a voltage divider circuit converts a change in resistance in resistors 14-17 on post 12 into a voltage signal used to control the cursor of a computer display 70. Thick film resistor 14, found on the right side of column 19, and thick film resistor 16, found on the left side of column 19, together form a voltage divider with a measurement point 45 in between them. When any sideways pressure on the post occurs, the voltage at point 45 changes. For example, if the column 19 were pressed to the right, resistor 14 would be in compression and resistor 16 would be in tension. Therefore, the resistance of resistor 14 would decrease, and the resistance of resistor 16 would increase. Both changes in resistance would contribute to a higher voltage at point 45. Front-to-back pressure is similarly sensed at test point 46 located between resistor 15, found on the front of post 12, and resistor 17, located on the back of post 12. Strains of less than 0.0002 inches per inch are detected by the preferred embodiment described herein.

The resistor divider networks of FIG. 5 are formed by placing a voltage on pads 61 and 66, which contact electrodes 23 and 28, respectively. In the preferred embodiment, the voltage is between 3.3V and 5V. This results in a positive voltage at one side of back resistor 17 and right resistor 14. Pads 62 and 65, which contact electrodes 24 and 27, respectively, are grounded. Thus, one side of front resistor 15 and left resistor 16 is grounded. Pads 60 and 64 (contacting electrodes 22 and 26) are tied together and form node 45 between resistors 14 and 16, for side to side or "X" axis motion, on display 70. Pads 63 and 67 (contacting electrodes 25 and 29) are tied together and form node 46 between resistors 15 and 17, for front to back or "Y" axis motion, on display 70. Many other patterns of wiring may be used, but the preferred embodiment described above results in one-sided board, requiring no cross-overs.

The "X" axis, or horizontal, signal from node 45 is connected to the computer system 72 for "X" signal processing 74 to control horizontal movement of a cursor on display 70. Likewise, the "Y" axis, or vertical, signal from node 45 is connected to the computer system 72 for "Y" signal processing 76 to control vertical movement of a cursor on display 70. The X and Y signal processing operations 74 and 76 may be performed as described in U.S. patent application Serial No. 07/953,613, filed September 29, 1992, and entitled "Multiple Input Device Control of Single Cursor", or as described in PCT application, International Publication No. WO 92/09982, entitled "Controller For Improved Computer Pointing Devices. Both of these applications are incorporated herein by reference.

FIG. 6 illustrates one possible installation of the pointing device in the center of a computer keyboard 78. Post 12, with base 19, are placed between the letters "G" and "H" in the keyboard 78. The buttons for several keys, including G and H, have been removed from their mounts so that post 12 and base 19 are visible. The buttons for keys G and H would be pressed onto mounts 80 and 82, respectively. Post 12 has a small button 84 attached to the top of the post. The buttons for keys G and H would be notched on the sides adjacent post 12 to provide for clearance of a 1/4-inch button attached to the top of post 12. Also, sometimes the pointing device is placed between keys G, H and B. In this installation, the back of key B is notched, and the inside front corner of keys G and H is notched.

Base 19 is attached to the keyboard base 86. Electrical connections from base 19 are cabled (not shown) to the back of the keyboard, and from there to computer 72. Alternatively, base 19 might be incorporated into the circuit board carrying the key electronics. In such an implementation, post 12 would have to extend through keyboard base 86 to the circuit board underneath base 86. Other possible installations for the pointing device of the present invention are shown and described in U.S. patent application Serial No. 07/886,662, filed May 10, 1992, entitled "A Pointing Device For Retrofitting Onto The Keyboard Of An Existing Computer System", and in PCT application, International Publication No. WO 92/09996, entitled "Analog Input Device Located In The Primary Typing Area Of A Keyboard." Both of these applications are incorporated herein by reference.

It will be appreciated by one skilled in the art that the pointing device of the present invention might be mounted anywhere on or proximate to the keyboard. Further, when mounted separate from the keyboard, the pointing device might be incorporated into its own housing as a miniature "joystick" for use by an operator to control the computer display cursor.

## Claims

1. A pointing device (10) for providing input control signals to a computer (74, 76) for positioning a cursor on a display (70), in a computing system (72) having a computer, a display (70), a keyboard (78), said pointing device (10) characterized in that it comprises;

   a base (19) for supporting the pointing device (10);

   an elongated beam (12) having one end in fixed relation to said base (19) and an opposite end in spaced relation to said base (19), said beam constructed of material for flexing in response to application of a force at said opposite end, said force having a component in a direction transverse to said beam (12);

   thick film resistors (14-17) formed of cermet material with a gage factor between 12 and 22 sintered on at least two orthogonal sides of said beam (12) for sensing longitudinal tension and compression strain in a direction along the length of said beam (12) when said beam (12) is flexed in response to said application of force, each resistor (14-17) changing resistance as a function of the longitudinal tension and compression strain sensed by the resistor;

   said thick film resistors (14-17) on orthogonal sides being matched in resistance to within fifteen percent (15%) ; and

   means for converting the changes in resistance in said resistors (14-17) into a control signal for use by the computer in controlling the display cursor.

2. The pointing device of claim 1 wherein said elongated beam (12) is formed of ceramic composite material that is by weight 85% to 97% aluminium oxide with the remainder being glass binder.

3. The pointing device of any one of claims 1 to 2 wherein said base (19) is composed of epoxy-glass laminate material and said beam (12) is attached to said base (19) with a high modulus adhesive (34).

**4.** The pointing device of any one of claims 1 to 3 wherein the cermet material has a gage factor near 18.

**5.** The pointing device of any one of claims 1 to 4 wherein:

said beam (12) has four orthogonal sides;

a said thick film resistor (14-17) is sintered on each side, the resistors on parallel (14 and 16, 15 and 17) opposing sides are connected in series so that as one of the series-connected resistors increases in resistance due to beam flexure, the other series-connected resistor decreases in resistance;

said thick film resistors (14-17) on opposing sides are matched to within one percent (1%); and

said converting means (45, 46, 74, 76) converting both the resistance increase and the resistance decrease of each pair of series connected resistors into the control signal whereby the sensitivity of the pointing device is increased.

**6.** A computer keyboard (78) for generating key stroke information and computer-display cursor-control information, said keyboard (78) having a keyboard base (86), keys mounted on said keyboard base (86), and a cursor pointing device (10, 84), said keyboard base (86) having a pointing device base (19) for supporting the cursor pointing device (84), said cursor pointing device (84) characterized in that it comprises;

a post (12) having one end in fixed relation to said pointing device base (19) and a second free end movable relative to said pointing device base (19), said post (12) constructed of ceramic-composite material and flexing in response to force applied to said free end;

thick film resistors (14-17) of cermet material with a gage factor greater between 12 and 22 sintered to at least two orthogonal sides of said post (12) for sensing longitudinal compression and tension strain in a direction along the length of said post (12) when said post (12) is flexed, each resistor (14-17) changing resistance as a function of the longitudinal compression and tension strain in said cermet material;

said thick film resistors (14-17) on orthogonal sides being laser trimmed to provide a predetermined resistance relationship between said resistors; and

means for converting (45, 46, 74, 76) the changes in resistance in said resistors (14-17) into the cursor-control information.

**7.** The computer keyboard (78) of claim 6 and in addition:

said post (12) having four orthogonal sides;

thick film resistors (14-17) of said cermet material screened on and sintered to each of the four sides of said post (12);

said thick film resistors (14-17) being laser trimmed to substantially match resistances of resistors on opposing sides of said post (12);

said converting means (45, 46, 74, 76) sensing the voltage divided between the resistors on said opposing sides of said post (12) to sense the flexure of said post (12).

**Patentansprüche**

**1.** Eine Zeigevorrichtung (10), die Eingabesteuersignale für einen Computer (74, 76) zur Positionierung eines Cursors auf einem Bildschirm (70) in einem Computersystem (72) liefert, das einen Computer, einen Bildschirm (70), eine Tastatur (78) und das Zeigegerät (10) enthält, gekennzeichnet dadurch, dass die Zeigevorrichtung folgende Komponenten umfasst:

eine Basis (19), auf der die Zeigevorrichtung (10) befestigt ist;

ein länglicher Träger (12), dessen eines Ende in Bezug zur Basis (19) fixiert ist und dessen entgegengesetztes Ende einen Abstand von der Basis (19) hat, und der aus einem Material konstruiert ist, das sich als Reaktion auf die Ausübung einer Kraft mit einer Komponente in einer quer zum Träger (12) verlaufenden Richtung auf das entgegengesetzte Ende biegt;

Dickfilmwiderstände (14-17) aus Cermet-Material mit einem Dehnungsfaktor zwischen 12 und 22, die auf mindestens zwei orthogonal zueinander ausgerichteten Seiten des Trägers 12 aufgesintert sind, zum Erfassen längsgerichteter Dehnungs- und Kompressionsbelastungen in einer Richtung entlang der Längsachse des Trägers (12), wenn der Träger (12) sich als Reaktion auf die Kraftausübung biegt, wobei jeder Widerstand (14-17) seinen Widerstandswert in Abhängigkeit von der vom Widerstand erfassten längsgerichteten Dehnungs- und Kompressionsbelastung ändert;

wobei die Dickfilmwiderstände (14-17) auf orthogonal zueinander stehenden Seiten in ihrem Widerstandswert bis auf höchstens fünfzehn Prozent (15%) Abweichung aneinander angeglichen werden; und

ein Mittel zum Umwandeln der Widerstandsänderung in den Widerständen (14-17) in ein Steuersignal, das der Computer zur Steuerung des Bildschirmcursors verwendet.

2. Die Zeigevorrichtung nach Anspruch 1, wobei der längliche Träger (12) aus Keramikverbundmaterial besteht, das aus 85 bis 97 Gewichtsprozent Aluminiumoxid und einem restlichen Anteil aus Glasbinder besteht.

3. Die Zeigevorrichtung nach Anspruch 1 oder 2, wobei die Basis (19) aus Epoxy-Glas-Laminatmaterial besteht und der Träger (12) mit einem Klebstoff (34) mit hohem Elastizitätsmodul an der Basis (19) befestigt ist.

4. Die Zeigevorrichtung nach Anspruch 1 bis 3, bei der das Cermet-Material einen Dehnungsfaktor von ca. 18 besitzt.

5. Die Zeigevorrichtung nach Anspruch 1 bis 4, wobei:

der Träger (12) vier orthogonal zueinander ausgerichtete Seiten besitzt;

auf jeder Seite ein Dickfilmwiderstand (14-17) aufgesintert ist, und die Widerstände auf parallelen (14 und 16, 15 und 17), gegenüberliegenden Seiten in Reihe geschaltet sind, so dass wenn einer der in Reihe geschalteten Widerstände seinen Widerstandswert infolge einer Biegung des Trägers erhöht, der andere in Reihe geschaltete Widerstand seinen Widerstandswert verringert;

die Dickfilmwiderstände (14-17) auf gegenüberliegenden Seiten in ihrem Widerstandswert bis auf höchstens ein Prozent (1%) Abweichung aneinander angeglichen sind; und

das Umwandlungsmittel (45, 46, 74, 76) sowohl die Widerstandszunahme als auch die Widerstandsabnahme jedes Paares in Reihe geschalteter Widerstände in ein Steuersignal umwandelt, wodurch die Empfindlichkeit der Zeigevorrichtung gesteigert wird.

6. Eine Computertastatur (78) zur Generierung von Tastenbetätigungsinformationen und Computerbildschirm-Cursorsteuerinformationen, wobei die Tastatur (78) eine Tastaturbasis (86), auf der Tastaturbasis (86) angebrachte Tasten und eine Cursorzeigevorrichtung (10, 84) besitzt, wobei die Tastaturbasis (86) eine Zeigevorrichtungsbasis (19) zur Aufnahme der Cursorzeigevorrichtung (84) besitzt und die Cursorzeigevorrichtung (84) dadurch gekennzeichnet ist, dass sie folgende Komponenten enthält:

einen Stab (12) mit einem Ende, das in Bezug auf die Zeigevorrichtungsbasis (19) fixiert ist, und einem zweiten Ende, das relativ zur Zeigevorrichtungsbasis (19) beweglich ist, wobei der Stab (12) aus einem Keramikverbundmaterial konstruiert ist und sich als Reaktion auf ein auf das freie Ende ausgeübte Kraft biegt;

Dickfilmwiderstände (14-17) aus Cermet-Material mit einem Dehnungsfaktor zwischen 12 und 22, die auf mindestens zwei orthogonal zueinander ausgerichteten Seiten des Stabs 12 aufgesintert sind, zum Erfassen längsgerichteter Kompressions- und Dehnungsbelastungen in einer Richtung entlang der Längsachse des Stabs (12), wenn der Stab (12) sich als Reaktion auf die Kraftausübung biegt, wobei jeder Widerstand (14-17) seinen Widerstandswert in Abhängigkeit von der vom Widerstand erfassten längsgerichteten Kompressions- und Dehnungsbelastung ändert;

wobei die Dickfilmwiderstände (14-17) auf orthogonal zueinander stehenden Seiten mit einem Laser so eingestellt werden, dass eine vorgegebene Widerstandswertbeziehung zwischen den Widerständen besteht; und

ein Mittel zum Umwandeln (45, 46, 74, 76) der Widerstandsänderung in den Widerständen (14-17) in die Cursorsteuerinformationen.

7. Die Computertastatur (78) nach Anspruch 6, wobei außerdem:

der Stab (12) vier orthogonal zueinander ausgerichtete Seiten besitzt;

auf jede der vier Seiten des Stabs (12) Dickfilmwiderstände (14-17) aus Cermet-Material im Siebdruckverfahren aufgedruckt und gesintert worden sind;

die Dickfilmwiderstände (14-17) mit einem Laser so eingestellt worden sind, dass ihre Widerstandswerte im wesentlichen mit denen auf gegenüberliegenden Seiten des Stabs (12) übereinstimmen;

das Umwandlungsmittel (45, 46, 74, 76) die zwischen den Widerständen auf den gegenüberliegenden Seiten des Stabs (12) geteilte Spannung erfasst, um die Biegung des Stabs (12) festzustellen.

## Revendications

1. Dispositif de pointage (10) pour délivrer des signaux de commande d'entrée à un ordinateur (74, 76) afin de positionner un curseur sur un affichage (70), dans un système d'ordinateur (72) comportant un ordinateur, un affichage (70), un clavier (78), ledit dispositif de pointage (10) étant caractérisé en ce qu'il comprend :

   une base (19) pour supporter le dispositif de pointage (10) ;
   une poutre allongée (12) possédant une extrémité en relation fixe avec ladite base (19), et une extrémité opposée en relation espacée avec ladite base (19), ladite poutre construite de matériau pour flexion en réponse à l'application d'une force à ladite extrémité opposée, ladite force présentant une composante dans la direction transversale de ladite poutre (12) ;
   des résistances à couche épaisse (14 à 17) formées de matériau de cermet avec un facteur de jauge compris entre 12 et 22 aggloméré sur au moins deux côtés orthogonaux de ladite poutre (12) pour détecter la tension longitudinale et la déformation de compression dans une direction selon la longueur de ladite poutre (12) lorsque ladite poutre (12) est fléchie en réponse à ladite application de force, chaque résistance (14 à 17) changeant de résistance en fonction de la tension longitudinale et de la déformation de compression détectées par la résistance ;
   lesdites résistances à couche épaisse (14 à 17) sur des côtés orthogonaux étant ajustées en résistance à moins de quinze pour cent (15 %) ; et
   un moyen de conversion des changements de résistance dans lesdites résistances (14 à 17) en un signal de commande pour utilisation par l'ordinateur dans la commande du curseur d'affichage.

2. Dispositif de positionnement selon la revendication 1, dans lequel ladite poutre allongée (12) est formée de matériau composite de céramique qui est de 85 % à 97 % en poids d'oxyde d'aluminium, le reste étant un liant en verre.

3. Dispositif de pointage selon l'une quelconque des revendications 1 à 2, dans lequel ladite base (19) est composée de matériau de verre-époxy stratifié et ladite poutre (12) est fixée à ladite base (19) avec un adhésif à haut module d'élasticité (34).

4. Dispositif de pointage selon l'une quelconque des revendications 1 à 3, dans lequel le matériau de cermet possède un facteur de jauge proche de 18.

5. Dispositif de pointage selon l'une quelconque des revendications 1 à 4, dans lequel :

   ladite poutre (12) comporte quatre côtés orthogonaux ;
   une desdites résistances à couche épaisse (14 à 17) est agglomérée sur chaque côté, les résistances (14 et 16, 15 et 17) sur les côtés parallèles opposés sont connectées en série de sorte que lorsque la résistance d'une des résistances connectées en série augmente à cause de la flexion de la poutre, les résistances des autres résistances connectées en série décroissent ;
   lesdites résistances à couche épaisse (14 à 17) sur les côtés opposés sont ajustées à moins de un pour cent (1 %) : et
   lesdits moyens de conversion (45, 46, 74, 76) convertissant à la fois l'augmentation de résistance et la diminution de résistance de chaque paire de résistances connectées en série en signal de contrôle, d'où il résulte que la sensibilité du dispositif de pointage est augmentée.

6. Clavier d'ordinateur (78) pour générer des informations de frappe de touche et des informations de commande de curseur d'affichage d'ordinateur, ledit clavier (78) comportant une base de clavier (86), des touches montées sur ladite base de clavier (86), et un dispositif de pointage de curseur (10, 84), ladite base de clavier (86) comportant une base de dispositif de pointage (19) pour supporter le dispositif de pointage de curseur (84), ledit dispositif de pointage de curseur (84) étant caractérisé en ce qu'il comprend :

   une colonnette (12) comportant une extrémité en relation fixe avec ladite base de dispositif de pointage (19) et une deuxième extrémité libre mobile par rapport à ladite base de dispositif de pointage (19), ladite colonnette (12) étant construite en matériau composite de céramique et fléchissant en réponse à la force appliquée à ladite extrémité libre ;
   des résistances à couche épaisse (14 à 17) constituées de matériau de cermet avec un facteur de jauge supérieur entre 12 et 22, aggloméré sur au moins deux côtés orthogonaux de ladite colonnette (12) pour détecter la compression longitudinale et la déformation de tension dans une direction selon la longueur de ladite colonnette (12) lorsque ladite colonnette (12) est fléchie, chaque résistance (14 à 17) changeant de résistance en fonction de la compression longitudinale et de la déformation de tension dans ledit matériau de cermet ;

lesdites résistances à couche épaisse (14 à 17) sur des côtés orthogonaux étant recoupées au laser pour procurer une relation de résistance prédéterminée entre lesdites résistances ; et des moyens pour convertir (45, 46, 74, 76) les changements de résistance dans lesdites résistances (14 à 17) en informations de commande de curseur.

7. Clavier d'ordinateur (78) selon la revendication 6, et en plus :

ladite colonnette (12) comportant quatre côtés orthogonaux ;

des résistances à couche épaisse (14 à 17) constituées dudit matériau de cermet sérigraphiées et agglomérées sur chacun des quatre côtés de ladite colonnette (12) ;

lesdites résistances à couche épaisse (14 à 17) étant recoupées au laser pour ajuster sensiblement les résistances des résistances sur des côtés opposés de ladite colonnette (12) ;

lesdits moyens de conversion (45, 46, 74, 76) détectant la tension divisée entre les résistances sur lesdits côtés opposés de ladite colonnette (12) afin de détecter la flexion de ladite colonnette (12).

FIG. 1

FIG. 2A   FIG. 2B   FIG. 2C   FIG. 2D

EP 0 681 261 B1

FIG. 3

FIG. 5

11

FIG4A

FIG4B

fig. 6